# EUROPEAN PATENT APPLICATION

(11) **EP 4 763 405 A1**
(43) Date of publication of application: **24.06.2026**
(21) Application number: 24870647.5
(22) Date of filing: 23.09.2024
(51) Int. Cl.: B23K 26/70

(54) **ULTRAFAST PICOSECOND LASER DIE-CUTTING FLAKING MACHINE**

(30) Priority: 26.09.2023 CN 202311260480
(71) Applicant: Shenzhen Yinghe Technology Co., Ltd., Shenzhen, Guangdong 518132 (CN); Dongguan Areconn Precision Machine Co., Ltd., Dongguan, Guangdong 523718 (CN)
(72) Inventor: HUANG, Shengwu, Shenzhen, Guangdong 518132 (CN); LI, Huajie, Shenzhen, Guangdong 518132 (CN); HUANG, Hong, Shenzhen, Guangdong 518132 (CN)
(74) Representative: Metida
(86) International application number: PCT/CN2024/120353
(87) International publication number: WO 2025/067103

(57) **Abstract**

Disclosed in the present invention is an ultrafast picosecond laser die-cutting flaking machine, comprising a frame, and an electrode sheet unwinding assembly, a flattening roller assembly, an unwinding deviation correction detection assembly, a belt connecting platform assembly, a tension detection assembly, a color code detection assembly, a tension swing roller assembly, a reinforcing rib assembly, a front reinforcing rib deviation detection assembly, a travel deviation correction assembly, a travel deviation correction detection assembly, a cache assembly, a traction assembly, a picosecond laser die-cutting and blanking mechanism, an electrode sheet vacuum conveying belt mechanism, a double-station electrode sheet regular receiving mechanism, and an NG receiving box that are arranged sequentially in an electrode sheet unwinding direction. The present invention adopts a picosecond laser cutting method, has good cutting effect, a fast cutting speed, and a high production efficiency, and has the functions of dust removal and waste collection. The present invention can be compatible with wide-width electrode sheet conveying, thereby achieving a high compatibility, and also has a belt dust removal function, an electrode sheet dust removal function, and a material ramming function in an electrode sheet conveying section. In addition, two sets of electrode sheets are collected by means of a double-station OK material box, so that the material collection efficiency is high.

## Description

### TECHNICAL FIELD

The present invention relates to the field of battery cell manufacturing, and specifically, to an ultrafast picosecond laser die-cutting flaking machine.

### BACKGROUND

Lithium batteries are widely used in industries such as notebook computers, power tools, and new energy vehicles. As these industries develop, the demand for lithium batteries continues to increase, and requirements for lithium batteries become increasingly high. Currently, lithium battery cells are manufactured through automated processing using cell electrode flaking and winding equipment. The process mainly relies on the cooperation of a winding head, an electrode sheet feeding device, a separator feeding device, a separator cutting device, a tape pasting device, and other components. Positive electrode sheets, negative electrode sheets, and separators are stacked in a specific order and then subjected to winding and tape pasting to form the cells. Among these steps, cutting of the electrode sheet constitutes one of the critical processes in the winding of lithium battery cells. Existing electrode sheet cutting equipment drives a cutting knife to cut the electrode sheet by means of a driving mechanism and guides the movement of the cutting knife using guide shafts and guide shaft sleeves. However, a fit clearance exists between the guide shaft and the guide shaft sleeve. This clearance causes the cutting knife to wobble easily during driven movement. Consequently, an effective shear cross-section is difficult to form between the cutting knife and a fixed cutting knife during cutting of the electrode sheet, and the cutting position of the electrode sheet on the electrode sheet cutting mechanism becomes uncertain. The cut edges of the electrode sheet exhibit numerous burrs, and dust is generated during the cutting process, seriously affecting the quality of lithium battery cells.

### SUMMARY

A purpose of the present invention is to overcome the deficiencies of the prior art and provide an ultrafast picosecond laser die-cutting flaking machine.

The technical solution of the present invention is as follows.

The ultrafast picosecond laser die-cutting flaking machine includes a frame, and an electrode sheet unwinding assembly, a flattening roller assembly, an unwinding deviation correction detection assembly, a belt connecting platform assembly, a tension detection assembly, a color code detection assembly, a tension swing roller assembly, a reinforcing rib assembly, a front reinforcing rib deviation detection assembly, a travel deviation correction assembly, a travel deviation correction detection assembly, a cache assembly, a traction assembly, a picosecond laser die-cutting and blanking mechanism, an electrode sheet vacuum conveying belt mechanism, a double-station electrode sheet regular receiving mechanism, and an NG receiving box that are mounted on the frame and sequentially arranged along an electrode sheet unwinding direction, where automatic flattening and unwinding of an electrode sheet are completed by the electrode sheet unwinding assembly and the flattening roller assembly, feedback is provided to the electrode sheet unwinding assembly by the unwinding deviation correction detection assembly for automatic centering and deviation correction of the electrode sheet, real-time color code identification, tension detection, and tension adjustment are performed on the traveling electrode sheet by the tension detection assembly, the color code detection assembly, and the tension swing roller assembly after the electrode sheet passes through the belt connecting platform assembly, the reinforcing rib assembly performs reinforcement treatment on a tab region, the front reinforcing rib deviation detection assembly detects electrode sheet deviation, and provides feedback to the reinforcing rib assembly, the travel deviation correction assembly performs centering and deviation correction on the electrode sheet in conjunction with the travel deviation correction detection assembly, the cache assembly caches two long electrode sheets, the traction assembly provides traction for the electrode sheet during traveling, performs tension isolation, and performs, in conjunction with the picosecond laser die-cutting and blanking mechanism, one-step formation of the electrode sheet, including tab cutting, V-corner cutting, and electrode sheet cutting, the formed electrode sheet is conveyed to a material receiving position by the electrode sheet vacuum conveying belt mechanism, an OK electrode sheet reaching the material receiving position is rammed to the double-station electrode sheet regular receiving mechanism, and an NG electrode sheet is further conveyed to the NG receiving box.

Further, the picosecond laser die-cutting and blanking mechanism includes a cutting base plate assembly, a laser focus height adjustment assembly, and an optical path system. The cutting base plate assembly includes a first support, and a belt pressing lift cylinder, a belt pressing roller, an air blowing knife, a first negative pressure dust removal duct, a cutting base plate, a first waste material duct, a second waste material duct, an air knife pressure regulating valve, and a belt pressing lift cylinder pressure regulating valve that are disposed on the first support, the belt pressing roller is movably disposed above the cutting base plate and is driven by the belt pressing lift cylinder to press down to flatten the drawn electrode sheet, the air blowing knife and the first negative pressure dust removal duct are movably disposed above the cutting base plate by the belt pressing lift cylinder to blow air onto the cutting base plate and collect dust, the first waste material duct is disposed below the cutting base plate, adsorbs the positioned electrode sheet by negative pressure, and synchronously collects cut waste together with the second waste material duct disposed on one side of the first support during laser cutting, the air knife pressure regulating valve and the belt pressing lift cylinder pressure regulating valve are both disposed on one side of the first support, the air knife pressure regulating valve is connected to the air blowing knife via an air tube, and the belt pressing lift cylinder pressure regulating valve is connected to the belt pressing lift cylinder via an air tube.

The laser focus height adjustment assembly includes a second support and a liftable laser cutting group disposed on the second support, the liftable laser cutting group being located above the cutting base plate assembly.

The optical path system includes a picosecond laser, a beam expander, and a reflective mirror, wherein laser is emitted by the picosecond laser, the beam expander is configured to focus a light beam, the reflective mirror is configured to change a beam direction so that the light beam enters the liftable laser cutting group, and the tab cutting, V-corner cutting, and electrode sheet cutting on the cutting base plate are performed by the liftable laser cutting group.

Further, the liftable laser cutting group includes a plurality of servo lift modules arranged side by side, galvanometers movably disposed on the servo lift modules, and field lenses disposed at bottoms of the galvanometers, and a plurality of picosecond lasers are correspondingly provided.

Further, the electrode sheet vacuum conveying belt mechanism includes a first vacuum belt assembly, a second vacuum belt assembly, a third vacuum belt assembly, and a fourth vacuum belt assembly that are sequentially arranged along an electrode sheet conveying direction, a CCD dimension detection assembly is disposed on a top of the first vacuum belt assembly, a first vacuum belt brush dust removal assembly is disposed on a bottom of the first vacuum belt assembly, a second vacuum belt brush dust removal assembly is disposed on a top of the second vacuum belt assembly, an A-surface dust removal assembly and an A-surface CCD defect detection assembly are disposed on a bottom of the second vacuum belt assembly, a third vacuum belt brush dust removal assembly is disposed on a bottom of the third vacuum belt assembly, a B-surface dust removal assembly and a B-surface CCD defect detection assembly are disposed on a top of the third vacuum belt assembly, a fourth vacuum belt brush dust removal assembly is disposed on a top of the fourth vacuum belt assembly, a material ramming assembly is disposed at a material discharge position of the fourth vacuum belt assembly, a wide-width electrode sheet, after being cut at a preceding station, is sequentially conveyed through the first vacuum belt assembly, the second vacuum belt assembly, the third vacuum belt assembly, and the fourth vacuum belt assembly, during conveying, ion air knife blowing, negative pressure dust removal, and iron removal are performed, by the A-surface dust removal assembly and the B-surface dust removal assembly, on a front surface and a back surface of the electrode sheet, upon reaching the material receiving position, the electrode sheet is rammed by the material ramming assembly to the double-station electrode sheet regular receiving mechanism, and belts of the first vacuum belt assembly, the second vacuum belt assembly, the third vacuum belt assembly, and the fourth vacuum belt assembly are periodically cleaned by the first vacuum belt brush dust removal assembly, the second vacuum belt brush dust removal assembly, the third vacuum belt brush dust removal assembly, and the fourth vacuum belt brush dust removal assembly.

Further, the first vacuum belt assembly includes a first X-axis translation mechanism, a first vacuum cavity, a first negative pressure duct, a first vacuum belt, and a first belt drive motor, the first vacuum cavity is provided on the first X-axis translation mechanism, the first vacuum cavity is connected to a negative pressure source via the first negative pressure duct, the first vacuum belt is drivably disposed on the first vacuum cavity, and the first belt drive motor is disposed on one side of the first vacuum belt to drive the first vacuum belt.

The second vacuum belt assembly includes a second vacuum cavity, a second negative pressure duct, a second vacuum belt, a second belt drive motor, a first belt tensioning mechanism, and a first belt lift cylinder, the second vacuum cavity is connected to the negative pressure source via the second negative pressure duct, the second vacuum belt is drivably disposed on the second vacuum cavity, the second belt drive motor is disposed on one side of the second vacuum belt to drive the second vacuum belt, the second vacuum belt is tensioned by the first belt tensioning mechanism, and the first belt lift cylinder is disposed on one side of the second vacuum belt and is capable of lifting the second vacuum belt;

The third vacuum belt assembly includes a second X-axis translation mechanism, a third vacuum cavity, a third negative pressure duct, a third vacuum belt, and a third belt drive motor, the third vacuum cavity is disposed on the second X-axis translation mechanism, the third vacuum cavity is connected to the negative pressure source via the third negative pressure duct, the third vacuum belt is drivably disposed on the third vacuum cavity, and the third belt drive motor is disposed on one side of the third vacuum belt to drive the third vacuum belt.

The fourth vacuum belt assembly includes a fourth vacuum cavity, a fourth negative pressure duct, multiple vacuum belts, a fourth belt drive motor, a second belt tensioning mechanism, and a second belt lift cylinder, the fourth vacuum cavity is connected to the negative pressure source via the fourth negative pressure duct, the multiple vacuum belts are drivably disposed on the fourth vacuum cavity, the fourth belt drive motor is disposed on one side of the multiple vacuum belts to drive the multiple vacuum belts, the multiple vacuum belts are tensioned by the second belt tensioning mechanism, and the second belt lift cylinder is disposed on one side of the multiple vacuum belts and is capable of lifting the multiple vacuum belts.

Further, the A-surface dust removal assembly includes a first air knife, a first iron removal device, and a second negative pressure dust removal duct, and the first air knife and the first iron removal device are connected to the negative pressure source via the second negative pressure dust removal duct.

The B-surface dust removal assembly includes a second air knife, a second iron removal device, and a third negative pressure dust removal duct, and the second air knife and the second iron removal device are connected to the negative pressure source via the third negative pressure dust removal duct.

Further, the material ramming assembly includes a cam lift motor, a home position sensor, and a material striking plate, the cam lift motor is drivingly connected to the material striking plate, and the home position sensor is disposed on an output end of the cam lift motor.

Further, the double-station electrode sheet regular receiving mechanism includes a base, a Y-axis translation module, a third support, an X-axis translation module, a material box positioning assembly, a double-station OK material box, a lift assembly, and an electrode sheet regular assembly, the Y-axis translation module is disposed on a top of the base, the third support is movably disposed on the Y-axis translation module, the X-axis translation module is disposed on the third support, the material box positioning assembly is movably disposed on the X-axis translation module and is driven by the X-axis translation module to move from the material receiving position to a material ramming position, the material box positioning assembly is provided with a material receiving chamber, one end of the material receiving chamber is provided with a loading/unloading port, the double-station OK material box is pushable into the material receiving chamber or pullable out of the material receiving chamber through the loading/unloading port, after being pushed into the material receiving chamber, the double-station OK material box is fixed by the material box positioning assembly, the other end of the material receiving chamber is provided with a material box presence detection sensor for sensing presence of the double-station OK material box, the double-station OK material box is partitioned by a partition plate to form a first electrode sheet receiving position and a second electrode sheet receiving position, a first electrode sheet receiving plate is placed at a bottom of the first electrode sheet receiving position, and a second electrode sheet receiving plate is placed at a bottom of the second electrode sheet receiving position, two lift assemblies are provided, are disposed on a bottom of the material box positioning assembly, and respectively correspond to the first electrode sheet receiving plate and the second electrode sheet receiving plate, the electrode sheet regular assembly is disposed on a top of the third support, corresponding to the material ramming position, and regularizes, after the first electrode sheet receiving plate or the second electrode sheet receiving plate is lifted by the lift assembly, the electrode sheet thereon, and a full material load detection sensor is further disposed on the top of the third support for sensing presence of the first electrode sheet receiving plate or the second electrode sheet receiving plate.

Further, the lift assembly includes a lift guide rail, a left guide rod, a middle lift block, a right guide rod, a connecting bracket, and a stepper screw motor, the left guide rod, the middle lift block, and the right guide rod are movably disposed on the lift guide rail via the connecting bracket and are driven by the stepper screw motor to move up and down, positioning pins are disposed on tops of the left guide rod, the middle lift block, and the right guide rod, a magnet and a lift completion sensor are further disposed on the top of the middle lift block, and a position limiting sensor is disposed on a lower portion of the lift guide rail.

Further, a dust removal assembly is further disposed at a bottom of the material box positioning assembly.

Compared with the prior art, the present invention has the following beneficial effects.
(1) The present invention adopts a laser cutting method without the need to repair knife tools or replace knife tools, significantly reducing production costs, time, and labor costs for knife tool debugging, replacement, and maintenance. Specifically, a picosecond laser is used to perform tab cutting, V-corner cutting, and electrode sheet cutting. The cutting method is stable and can greatly reduce dimensional errors in the electrode sheets, and the quality of the flaking process is significantly improved, ensuring a better cutting effect. Burrs and melt beads are much smaller than those produced by pulsed lasers, and the picosecond laser cutting speed is faster, so that the efficiency surpasses that of conventional pulsed lasers. improving the production efficiency.
(2) In the present invention, during laser cutting, negative pressure is used to adsorb and hold the electrode sheet in place, and the belt pressing roller is configured to flatten the electrode sheet, preventing wrinkling at the cutting position that affects the cutting effect. Dust removal and waste collection functions are provided.
(3) In the present invention, after laser cutting, vacuum belt assemblies are configured to convey the electrode sheet, preventing deviation during transportation. A first vacuum belt assembly, a second vacuum belt assembly, a third vacuum belt assembly, and a fourth vacuum belt assembly are arranged sequentially along the electrode sheet conveying direction. Wide electrode sheets with a width being equal to or smaller than 800 mm and a length being equal to or smaller than 700 mm can be accommodated, ensuring high compatibility. In the electrode sheet conveying section, belt dust removal function, electrode sheet dust removal function, and material ramming function are also provided.
(4) In the present invention, two sets of electrode sheets are collected by means of a double-station OK material box. The double-station OK material box is manually pushed into the material receiving chamber. The two electrode sheet receiving positions of the double-station OK material box enable automated full-material collection. After full collection, the box is manually pulled out. When the electrode sheet enters the double-station OK material box, the OK electrode sheet is neatly organized by the electrode sheet regular assembly, greatly reducing labor costs, and improving the material receiving efficiency.

### BRIEF DESCRIPTION OF DRAWINGS

To more clearly illustrate the technical solutions in the embodiments of the present invention, the drawings required for describing the embodiments or the prior art are briefly introduced below. Obviously, the drawings described below are only some embodiments of the present invention. For those of ordinary skill in the art, other drawings can also be obtained from these drawings without creative effort.
FIG. 1 is a schematic structural diagram of an ultrafast picosecond laser die-cutting flaking machine according to the present invention.
FIG. 2 is a schematic structural diagram of the picosecond laser die-cutting and blanking mechanism according to the present invention.
FIG. 3 is a schematic structural diagram of a cutting base plate assembly of the picosecond laser die-cutting and blanking mechanism according to the present invention.
FIG. 4 is a structural principle diagram of an optical path system of the picosecond laser die-cutting and blanking mechanism according to the present invention.
FIG. 5 is a schematic structural diagram of an electrode sheet vacuum conveying belt mechanism according to the present invention.
FIG. 6 is a schematic structural diagram of a first vacuum belt assembly of the electrode sheet vacuum conveying belt mechanism according to the present invention.
FIG. 7 is a schematic structural diagram of a second vacuum belt assembly of the electrode sheet vacuum conveying belt mechanism according to the present invention.
FIG. 8 is a schematic structural diagram of a third vacuum belt assembly of the electrode sheet vacuum conveying belt mechanism according to the present invention.
FIG. 9 is a schematic structural diagram of a fourth vacuum belt assembly of the electrode sheet vacuum conveying belt mechanism according to the present invention.
FIG. 10 is a schematic structural diagram of an A-surface dust removal assembly of the electrode sheet vacuum conveying belt mechanism according to the present invention.
FIG. 11 is a schematic structural diagram of a B-surface dust removal assembly of the electrode sheet vacuum conveying belt mechanism according to the present invention.
FIG. 12 is a schematic structural diagram of a material ramming assembly of the electrode sheet vacuum conveying belt mechanism according to the present invention.
FIG. 13 is a schematic structural diagram of a double-station electrode sheet regular receiving mechanism according to the present invention.
FIG. 14 is a side view of the double-station electrode sheet regular receiving mechanism according to the present invention.
FIG. 15 is a schematic structural diagram of a double-station OK material box of the double-station electrode sheet regular receiving mechanism according to the present invention.
FIG. 16 is a schematic structural diagram of a lift assembly of the double-station electrode sheet regular receiving mechanism according to the present invention.

### DETAILED DESCRIPTION OF EMBODIMENTS

To make the purpose, technical solution, and advantages of the present invention clearer, the present invention will be further described in detail below with reference to the accompanying drawings and embodiments. It should be understood that the specific embodiments described herein are merely used to explain the present invention and are not intended to limit the present invention.

To illustrate the technical solution of the present invention, description is provided below through specific embodiments.

### Embodiments

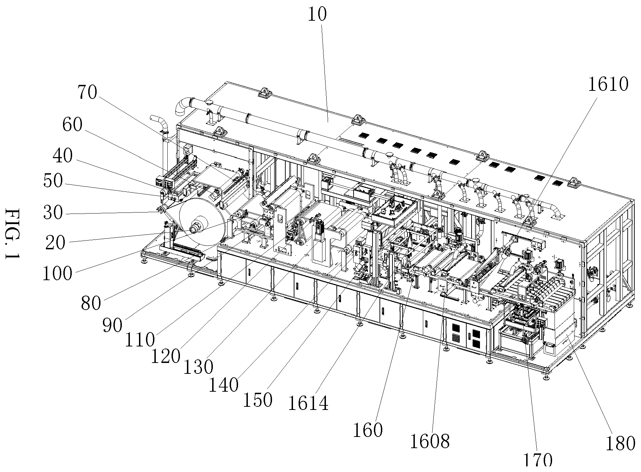

Referring to FIG. 1, these embodiments provide an ultrafast picosecond laser die-cutting flaking machine, which can realize laser die-cutting of positive and negative electrode sheets, laser V-corner cutting, laser sheet cutting, tape travel detection, dust removal, and material receiving and discharging functions. Specifically, the machine includes a frame 10, and an electrode sheet unwinding assembly 20, a flattening roller assembly 30, an unwinding deviation correction detection assembly 40, a belt connecting platform assembly 50, a tension detection assembly 60, a color code detection assembly 70, a tension swing roller assembly 80, a reinforcing rib assembly 9, a front reinforcing rib deviation detection assembly 100, a travel deviation correction assembly 110, a travel deviation correction detection assembly 120, a cache assembly 130, a traction assembly 140, a picosecond laser die-cutting and blanking mechanism 150, an electrode sheet vacuum conveying belt mechanism 160, a double-station electrode sheet regular receiving mechanism 170, and an NG receiving box 180 that are mounted on the frame 10 and sequentially arranged along an electrode sheet unwinding direction.

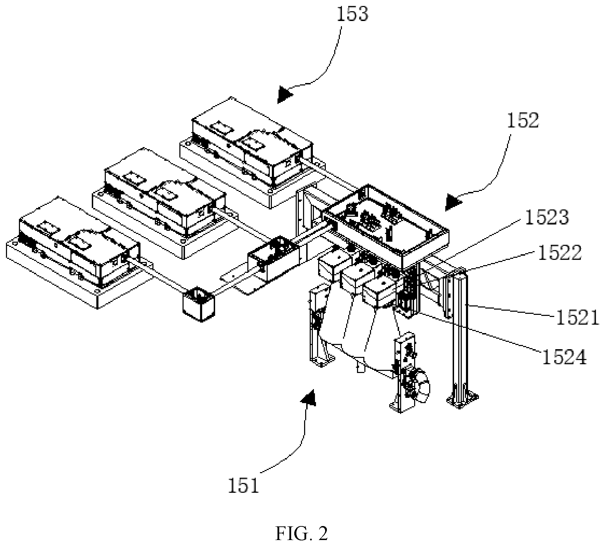

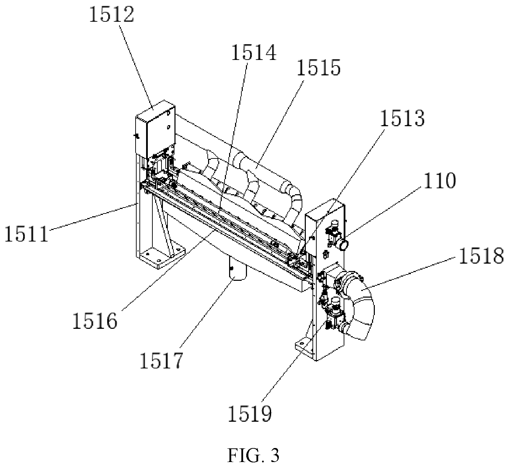

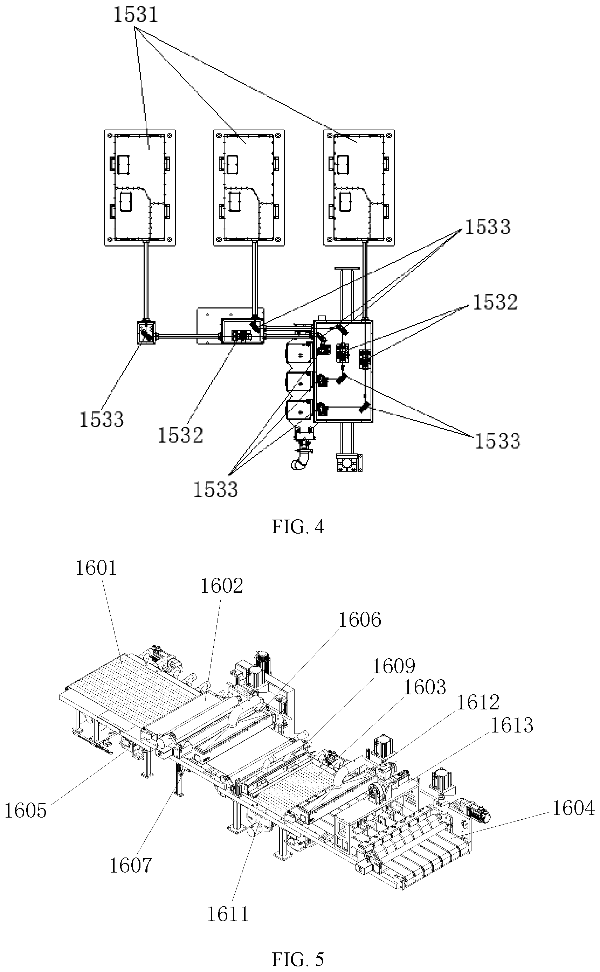

As shown in FIG. 2, the picosecond laser die-cutting and blanking mechanism 150 includes a cutting base plate assembly 151, a laser focus height adjustment assembly 152, and an optical path system 153. As shown in FIG. 3, the cutting base plate assembly 151 includes a first support 1511 and a belt pressing lift cylinder 1512, a belt pressing roller 1513, an air blowing knife 1514, a first negative pressure dust removal duct 1515, a cutting base plate 1516, a first waste material duct 1517, a second waste material duct 1518, an air knife pressure regulating valve 1519, and a belt pressing lift cylinder pressure regulating valve 1520 that are disposed on the first support 1511. The belt pressing roller 1513 is movably disposed above the cutting base plate 1516 and is driven by the belt pressing lift cylinder 1512 to press down and flatten the drawn electrode sheet. The air blowing knife 1514 and the first negative pressure dust removal duct 1515 are movably disposed above the cutting base plate 1516 by the belt pressing lift cylinder 1512, blow air onto the cutting base plate 1516, and collect dust. The first waste material duct 1517 is disposed below the cutting base plate 1516, adsorbs the positioned electrode sheet by negative pressure, and synchronously collects cut waste together with the second waste material duct 1518 disposed on one side of the first support 1511 during laser cutting. The air knife pressure regulating valve 1519 and the belt pressing lift cylinder pressure regulating valve 1520 are both disposed on one side of the first support 1511. The air knife pressure regulating valve 1519 is connected to the air blowing knife 1514 via an air tube. The belt pressing lift cylinder pressure regulating valve 1520 is connected to the belt pressing lift cylinder 1512 via an air tube. The laser focus height adjustment assembly 152 includes a second support 1521 and a liftable laser cutting group disposed on the second support 1521. The liftable laser cutting group is located above the cutting base plate assembly 151. The liftable laser cutting group includes a plurality of servo lift modules 1522 arranged side by side, galvanometers 1523 movably disposed on the servo lift modules 1522, and field lenses 1524 disposed at bottoms of the galvanometers 1523. As shown in FIG. 4, the optical path system 153 includes a plurality of picosecond lasers 1531, a beam expander 1532, and a reflective mirror 1533. Laser is emitted by the picosecond lasers 1531. The beam expander 1532 is configured to focus the light beam. The reflective mirror 1533 is configured to change the beam direction so that the light beam enters the galvanometers 1523 of the liftable laser cutting group. Tab cutting, V-corner cutting, and electrode sheet cutting are then performed on the electrode sheet on the cutting base plate 1516 by the field lenses 1524.

The picosecond laser die-cutting and blanking mechanism 150 can realize laser tab cutting, V-corner cutting, and electrode sheet cutting on the electrode sheet. The mechanism also has belt pressing, dust removal, and waste collection functions. The specific working process is as follows. The belt pressing lift cylinder 1512 descends. The belt pressing roller 1513 presses down to flatten the drawn electrode sheet. After the electrode sheet reaches a position, movement stops. The cutting base plate assembly 151 provides negative pressure through the first waste material duct 1517 to adsorb the electrode sheet. The PLC sends a signal to the picosecond lasers 1531. The picosecond lasers 1531 emit laser light that passes through the beam expander 1532 and the reflective mirror 1533 and enters the galvanometers 1523. Tab cutting, V-corner cutting, and electrode sheet cutting are performed on the electrode sheet by output from the field lenses 1524. During the laser cutting process, the air blowing knife 1514 and the first negative pressure dust removal duct 1515 perform a "one blow, one suction" operation at the cutting position to collect dust. The first waste material duct 1517 and the second waste material duct 1518 synchronously collect cut waste (V-corner waste and tab waste). If type change and laser focus adjustment are required, the servo lift modules 1522 are controlled to rise and fall to adjust the height between the field lenses 1524 and the electrode sheet being cut.

As shown in FIG. 5, the electrode sheet vacuum conveying belt mechanism 160 includes a first vacuum belt assembly 1601, a second vacuum belt assembly 1602, a third vacuum belt assembly 1603, and a fourth vacuum belt assembly 1604 arranged sequentially along an electrode sheet conveying direction. A CCD dimension detection assembly 1614 is disposed on the top of the first vacuum belt assembly 1601. A first vacuum belt brush dust removal assembly 1605 is disposed on the bottom of the first vacuum belt assembly 1601 and can periodically clean the belt of the first vacuum belt assembly 1601. A second vacuum belt brush dust removal assembly 1606 is disposed on the top of the second vacuum belt assembly 1602 and can periodically clean the belt of the second vacuum belt assembly 1602. An A-surface dust removal assembly 1607 and an A-surface CCD defect detection assembly 1608 are disposed on the bottom of the second vacuum belt assembly 1602. A B-surface dust removal assembly 1609 and a B-surface CCD defect detection assembly 1610 are disposed on the top of the third vacuum belt assembly 1603. During electrode sheet conveyance, ion air knife blowing, negative pressure dust removal, and iron removal are performed on the front and back surfaces of the electrode sheet by the A-surface dust removal assembly 1607 and the B-surface dust removal assembly 1609. A third vacuum belt brush dust removal assembly 1611 is disposed on the bottom of the third vacuum belt assembly 1603 and can periodically clean the belt of the third vacuum belt assembly 1603. A fourth vacuum belt brush dust removal assembly 1612 is disposed on the top of the fourth vacuum belt assembly 1604 and can periodically clean the belt of the fourth vacuum belt assembly 1604. A material ramming assembly 1613 is disposed at the material discharge position of the fourth vacuum belt assembly 1604. After being cut at the preceding station, wide electrode sheets are sequentially conveyed through the first vacuum belt assembly 1601, the second vacuum belt assembly 1602, the third vacuum belt assembly 1603, and the fourth vacuum belt assembly 1604 to the material discharge position. After the electrode sheet reaches the material receiving position, the electrode sheet is rammed by the material ramming assembly 1613 to the double-station electrode sheet regular receiving mechanism 170.

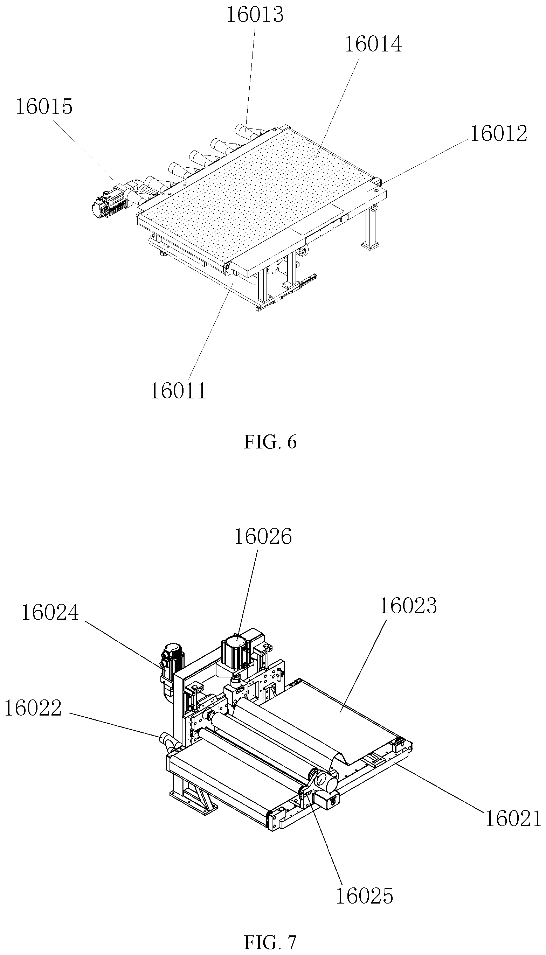

As shown in FIG. 6, the first vacuum belt assembly 1601 includes a first X-axis translation mechanism 16011, a first vacuum cavity 16012, a first negative pressure duct 16013, a first vacuum belt 16014, and a first belt drive motor 16015. The first vacuum cavity 16012 is disposed on the first X-axis translation mechanism 16011. The first vacuum cavity 16012 can be driven by the first X-axis translation mechanism 16011 to move along the X-axis. The first vacuum cavity 16012 is connected to a negative pressure source through the first negative pressure duct 16013. The first vacuum belt 16014 is drivably disposed on the first vacuum cavity 16012. The first belt drive motor 16015 is disposed on one side of the first vacuum belt 16014 to drive the first vacuum belt 16014.

As shown in FIG. 7, the second vacuum belt assembly 1602 includes a second vacuum cavity 16021, a second negative pressure duct 16022, a second vacuum belt 16023, a second belt drive motor 16024, a first belt tensioning mechanism 16025, and a first belt lift cylinder 16026. The second vacuum cavity 16021 is connected to the negative pressure source through the second negative pressure duct 16022. The second vacuum belt 16023 is drivably disposed on the second vacuum cavity 16021. The second belt drive motor 16024 is disposed on one side of the second vacuum belt 16023 to drive the second vacuum belt 16023. The second vacuum belt 16023 is tensioned by the first belt tensioning mechanism 16025. The first belt lift cylinder 16026 is disposed on one side of the second vacuum belt 16023 and can drive the second vacuum belt 16023 to rise. This facilitates the replacement of the second vacuum belt 16023.

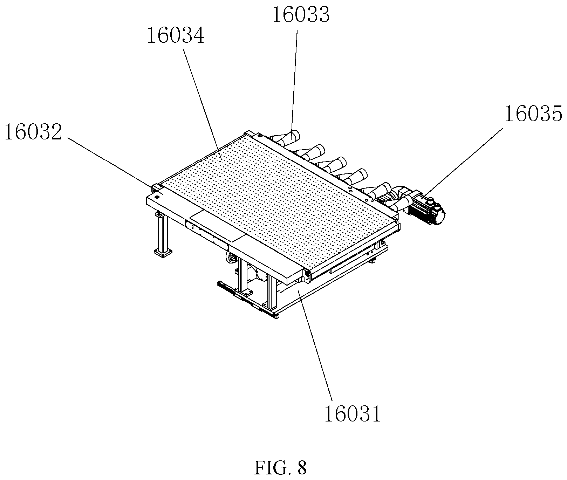

As shown in FIG. 8, the third vacuum belt assembly 1603 includes a second X-axis translation mechanism 16031, a third vacuum cavity 16032, a third negative pressure duct 16033, a third vacuum belt 16034, and a third belt drive motor 16035. The third vacuum cavity 16032 is disposed on the second X-axis translation mechanism 16031. The third vacuum cavity 16032 can be driven by the second X-axis translation mechanism 16031 to move along the X-axis. The third vacuum cavity 16032 is connected to the negative pressure source through the third negative pressure duct 16033. The third vacuum belt 16034 is drivably disposed on the third vacuum cavity 16032. The third belt drive motor 16035 is disposed on one side of the third vacuum belt 16034 to drive the third vacuum belt 16034.

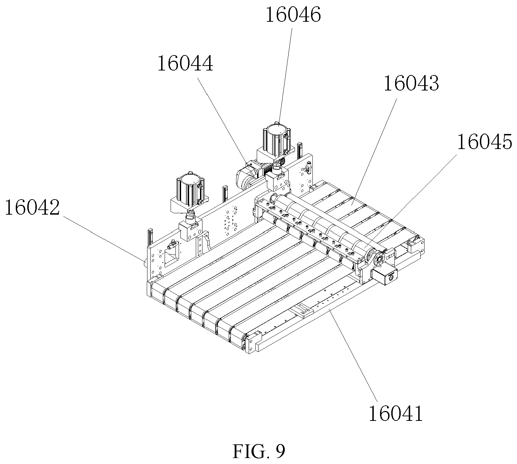

As shown in FIG. 9, the fourth vacuum belt assembly 1604 includes a fourth vacuum cavity 16041, a fourth negative pressure duct 16042, multiple vacuum belts 16043, a fourth belt drive motor 16044, a second belt tensioning mechanism 16045, and a second belt lift cylinder 16046. The fourth vacuum cavity 16041 is connected to the negative pressure source through the fourth negative pressure duct 16042. The multiple vacuum belts 16043 are drivably disposed on the fourth vacuum cavity 16041. The fourth belt drive motor 16044 is disposed on one side of the multiple vacuum belts 16043 to drive the multiple vacuum belts 16043. The multiple vacuum belts 16043 are tensioned by the second belt tensioning mechanism 16045. The second belt lift cylinder 16046 is disposed on one side of the multiple vacuum belts 16043 and can drive the multiple vacuum belts 16043 to rise. This facilitates the replacement of the multiple vacuum belts 16043.

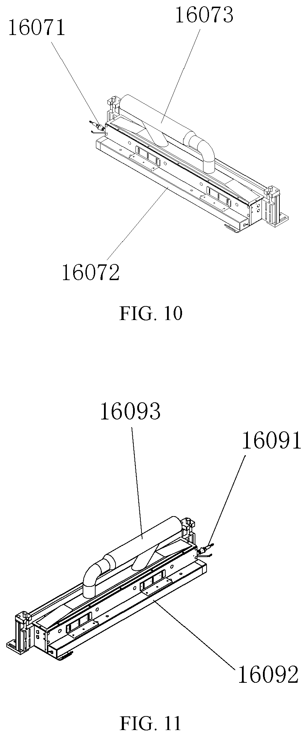

As shown in FIG. 10, the A-surface dust removal assembly 1607 includes a first air knife 16071, a first iron removal device 16072, and a second negative pressure dust removal duct 16073. The first air knife 16071 and the first iron removal device 16072 are connected to the negative pressure source through the second negative pressure dust removal duct 16073. Air blowing and negative pressure dust removal are performed by the first air knife 16071. Iron removal is performed by the first iron removal device 16072.

As shown in FIG. 11, the B-surface dust removal assembly 1609 includes a second air knife 16091, a second iron removal device 16092, and a third negative pressure dust removal duct 16093. The second air knife 16091 and the second iron removal device 16092 are connected to the negative pressure source through the third negative pressure dust removal duct 16093.

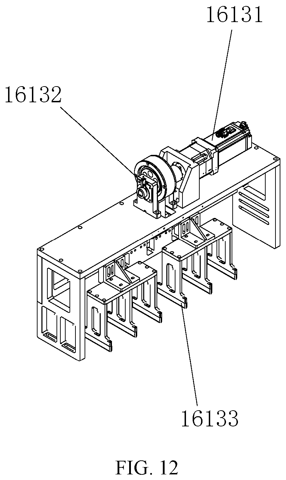

As shown in FIG. 12, the material ramming assembly 1613 includes a cam lift motor 16131, a home position sensor 16132, and a material striking plate 16133. The cam lift motor 16131 is drivingly connected to the material striking plate 16133. The material striking plate 16133 is driven to rise and fall by the cam lift motor 16131. The home position sensor 16132 is disposed on the output end of the cam lift motor 16131.

The electrode sheet vacuum conveying belt mechanism 160 uses vacuum belt assemblies to convey the electrode sheet, preventing deviation during transportation. A first vacuum belt assembly 1601, a second vacuum belt assembly 1602, a third vacuum belt assembly 1603, and a fourth vacuum belt assembly 1604 are arranged sequentially along the electrode sheet conveying direction. Wide electrode sheets with a width being smaller than or equal to 800 mm and a sheet length being smaller than or equal to 700 mm can be accommodated, ensuring high compatibility. Belt dust removal function, electrode sheet dust removal function, and material ramming function are also provided.

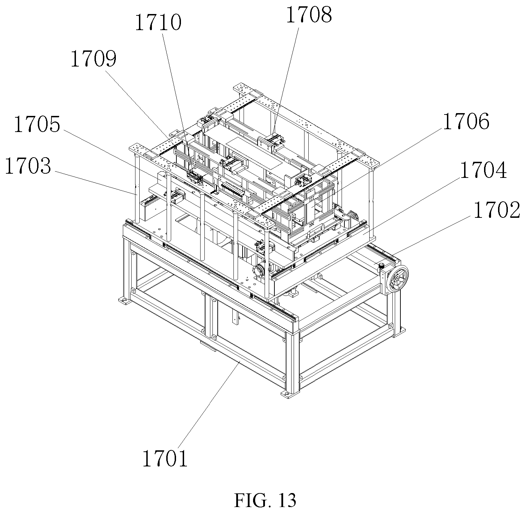

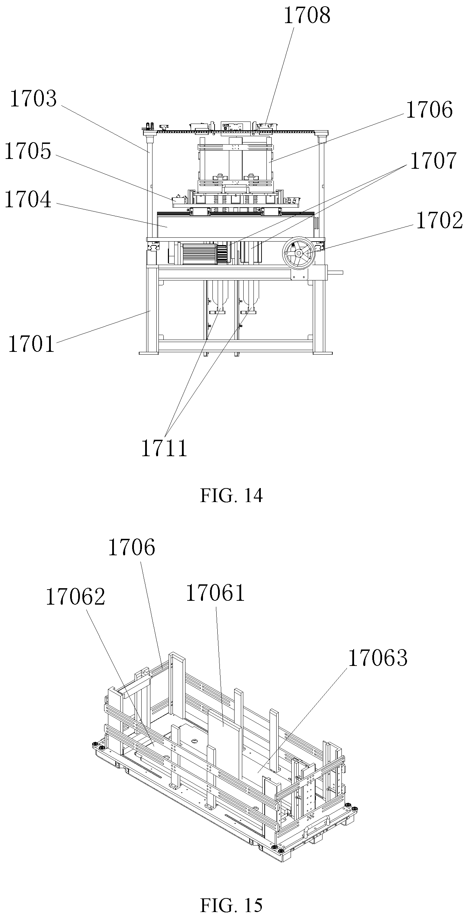

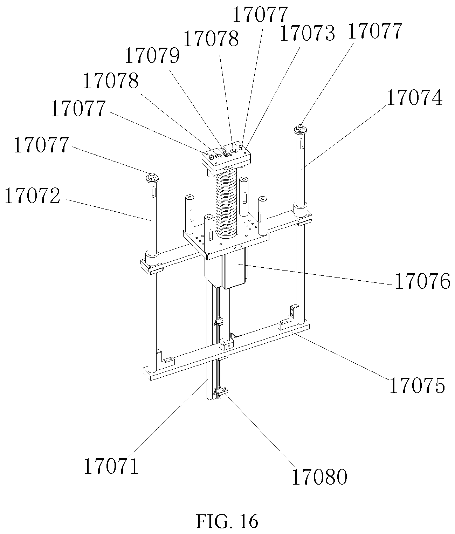

As shown in FIGs. 13 and 14, the double-station electrode sheet regular receiving mechanism 170 includes a base 1701, a Y-axis translation module 1702, a third support 1703, an X-axis translation module 1704, a material box positioning assembly 1705, a double-station OK material box 1706, a lift assembly 1707, and an electrode sheet regular assembly 1708. The Y-axis translation module 1702 is disposed on the top of the base 1701. The third support 1703 is movably disposed on the Y-axis translation module 1702. The X-axis translation module 1704 is disposed on the third support 1703. The material box positioning assembly 1705 is movably disposed on the X-axis translation module 1704 and is driven by the X-axis translation module 1704 to move from the material receiving position to the material ramming position. The material box positioning assembly 1705 is provided with a material receiving chamber. One end of the material receiving chamber is provided with a loading/unloading port. The double-station OK material box 1706 can be pushed into the material receiving chamber or pulled out of the material receiving chamber through the loading/unloading port. After being pushed into the material receiving chamber, the double-station OK material box 1706 is fixed by the material box positioning assembly 1705. The other end of the material receiving chamber is provided with a material box presence detection sensor 1709 for sensing the presence of the double-station OK material box 1706. As shown in FIG. 15, the double-station OK material box 1706 is partitioned by a partition plate 17061 to form a first electrode sheet receiving position and a second electrode sheet receiving position. A first electrode sheet receiving plate 17062 is placed at the bottom of the first electrode sheet receiving position. A second electrode sheet receiving plate 17063 is placed at the bottom of the second electrode sheet receiving position. Two lift assemblies 1707 are provided and are disposed at the bottom of the material box positioning assembly 1705 to respectively correspond to the first electrode sheet receiving plate 17062 and the second electrode sheet receiving plate 17063. The electrode sheet regular assembly 1708 is disposed on the top of the third support 1703, corresponding to the material ramming position. After the first electrode sheet receiving plate 17062 or the second electrode sheet receiving plate 17063 is lifted by the lift assembly 1707, the electrode sheet thereon is regularized. A full material load detection sensor 1710 is also disposed on the top of the third support 1703 for sensing the presence of the first electrode sheet receiving plate 17062 or the second electrode sheet receiving plate 17063. As shown in FIG. 16, the lift assembly 1707 includes a lift guide rail 17071, a left guide rod 17072, a middle lift block 17073, a right guide rod 17074, a connecting bracket 17075, and a stepper screw motor 17076. The left guide rod 17072, the middle lift block 17073, and the right guide rod 17074 are movably disposed on the lift guide rail 17071 via the connecting bracket 17075 and are driven by the stepper screw motor 17076 to move up and down. Positioning pins 17077 are disposed on the tops of the left guide rod 17072, the middle lift block 17073, and the right guide rod 17074. A magnet 17078 and a lift completion sensor 17079 are also disposed on the top of the middle lift block 17073. A position limiting sensor 17080 is disposed on the lower portion of the lift guide rail 170717. A dust removal assembly 1711 is also disposed at the bottom of the material box positioning assembly 1705.

After the double-station OK material box 1706 of the double-station electrode sheet regular receiving mechanism 170 is manually loaded, the material box presence detection sensor 1709 senses that it is in place. The cylinder of the material box positioning assembly 1705 extends to fix the double-station OK material box 1706. The X-axis translation module 1704 drives the double-station OK material box 1706 to translate from the material receiving position to the material ramming position. The lift assembly 1707 lifts the first electrode sheet receiving plate 17062. After the full material load detection sensor 1710 senses that it is in place, lifting stops. The material ramming assembly 1613 from the preceding station rams the electrode sheet onto the first electrode sheet receiving plate 17062. The electrode sheet is then regularized by the electrode sheet regular assembly 1708. The action is repeated to collect five sheets (the number can be set by program). The lift assembly 1707 drives the first electrode sheet receiving plate 17062 to descend and then rise again until the full material load detection sensor 1710 senses that it is in place again and then stops. The electrode sheet collection action is repeated. After the first electrode sheet receiving position is full, the lift assembly 1707 descends to the receiving end (position limiting sensor 17080) and separates from the first electrode sheet receiving plate 17062. The X-axis translation module 1704 drives the double-station OK material box 1706 to translate so that the second electrode sheet receiving position moves to the material ramming position. The lift assembly 1707 lifts the second electrode sheet receiving plate 17063 to rise and repeat the electrode sheet collection action. After the second electrode sheet receiving position is full, the lift assembly 1707 descends to the receiving end (position limiting sensor 17080) and separates from the second electrode sheet receiving plate 17063. An alarm prompts the operator to push out the double-station OK material box 1706. During the receiving process, the dust removal assembly 1711 collects dust from the double-station OK material box 1706.

If a type change is required, the double-station OK material box 1706 is manually loaded. After the material box presence detection sensor 1709 senses that it is in place and the cylinder of the material box positioning assembly 1705 extends to fix the double-station OK material box 1706, the double-station OK material box 1706 is driven by manually rotating the Y-axis translation module 1702 to move along the Y direction. This accommodates the receiving of different types of electrode sheets.

The specific working process of the ultrafast picosecond laser die-cutting flaking machine is as follows. Automatic flattening and unwinding of the electrode sheet are completed by the electrode sheet unwinding assembly 20 and the flattening roller assembly 30. Feedback is provided to the electrode sheet unwinding assembly 20 by the unwinding deviation correction detection assembly 40 for automatic centering and deviation correction of the electrode sheet. After passing through the belt connecting platform assembly 50, the traveling electrode sheet is subjected to real-time color code identification, tension detection, and tension adjustment by the tension detection assembly 60, the color code detection assembly 70, and the tension swing roller assembly 80. This ensures smooth travel of the electrode sheet. The reinforcing rib assembly 90 performs reinforcement treatment on the tab region to prevent tab folding. The front reinforcing rib deviation detection assembly 100 detects electrode sheet deviation and provides feedback to the reinforcing rib assembly 90 so that the tabs are not pressed. The travel deviation correction assembly 110 performs centering and deviation correction on the electrode sheet in conjunction with the travel deviation correction detection assembly 120. The cache assembly 130 caches two long electrode sheets. The traction assembly 140 provides traction for the electrode sheet during traveling, performs tension isolation, and performs, in cooperation with the picosecond laser die-cutting and blanking mechanism 150, one-step formation of the electrode sheet, including tab cutting, V-corner cutting, and electrode sheet cutting. The formed electrode sheet is conveyed to the material receiving position by the first vacuum belt assembly 1601, the second vacuum belt assembly 1602, the third vacuum belt assembly 1603, and the fourth vacuum belt assembly 1604. During conveyance, brush dust removal is performed on each section of the vacuum belts by the first vacuum belt brush dust removal assembly 1605, the second vacuum belt brush dust removal assembly 1606, the third vacuum belt brush dust removal assembly 1611, and the fourth vacuum belt brush dust removal assembly 1612. Dimension detection and double-sided defect detection of the electrode sheet are performed by the CCD dimension detection assembly 1614, the A-surface CCD defect detection assembly 1608, and the B-surface CCD defect detection assembly 1610. Ion air knife dust removal and iron removal are performed on the electrode sheet by the A-surface dust removal assembly 1607 and the B-surface dust removal assembly 1609. After the electrode sheet reaches the receiving position, OK electrode sheets are rammed by the material ramming assembly 1613 to the double-station electrode sheet regular receiving mechanism 170. NG electrode sheets continue to be conveyed to the NG receiving box 180.

The above descriptions are only preferred embodiments of the present invention and are not intended to limit the present invention. Any modifications, equivalent replacements, and improvements made within the spirit and principle of the present invention shall be included in the protection scope of the present invention.

## Claims

1. An ultrafast picosecond laser die-cutting flaking machine, **characterized by** comprising a frame, and an electrode sheet unwinding assembly, a flattening roller assembly, an unwinding deviation correction detection assembly, a belt connecting platform assembly, a tension detection assembly, a color code detection assembly, a tension swing roller assembly, a reinforcing rib assembly, a front reinforcing rib deviation detection assembly, a travel deviation correction assembly, a travel deviation correction detection assembly, a cache assembly, a traction assembly, a picosecond laser die-cutting and blanking mechanism, an electrode sheet vacuum conveying belt mechanism, a double-station electrode sheet regular receiving mechanism, and an NG receiving box that are mounted on the frame and sequentially arranged along an electrode sheet unwinding direction, wherein automatic flattening and unwinding of an electrode sheet are completed by the electrode sheet unwinding assembly and the flattening roller assembly, feedback is provided to the electrode sheet unwinding assembly by the unwinding deviation correction detection assembly for automatic centering and deviation correction of the electrode sheet, real-time color code identification, tension detection, and tension adjustment are performed on the traveling electrode sheet by the tension detection assembly, the color code detection assembly, and the tension swing roller assembly after the electrode sheet passes through the belt connecting platform assembly, the reinforcing rib assembly performs reinforcement treatment on a tab region, the front reinforcing rib deviation detection assembly detects electrode sheet deviation, and provides feedback to the reinforcing rib assembly, the travel deviation correction assembly performs centering and deviation correction on the electrode sheet in conjunction with the travel deviation correction detection assembly, the cache assembly caches two long electrode sheets, the traction assembly provides traction for the electrode sheet during traveling, performs tension isolation, and performs, in conjunction with the picosecond laser die-cutting and blanking mechanism, one-step formation of the electrode sheet, comprising tab cutting, V-corner cutting, and electrode sheet cutting, the formed electrode sheet is conveyed to a material receiving position by the electrode sheet vacuum conveying belt mechanism, an OK electrode sheet reaching the material receiving position is rammed to the double-station electrode sheet regular receiving mechanism, and an NG electrode sheet is further conveyed to the NG receiving box.

2. The ultrafast picosecond laser die-cutting flaking machine according to claim 1, **characterized in that** the picosecond laser die-cutting and blanking mechanism comprises a cutting base plate assembly, a laser focus height adjustment assembly, and an optical path system; wherein
the cutting base plate assembly comprises a first support, and a belt pressing lift cylinder, a belt pressing roller, an air blowing knife, a first negative pressure dust removal duct, a cutting base plate, a first waste material duct, a second waste material duct, an air knife pressure regulating valve, and a belt pressing lift cylinder pressure regulating valve that are disposed on the first support, the belt pressing roller is movably disposed above the cutting base plate and is driven by the belt pressing lift cylinder to press down to flatten the drawn electrode sheet, the air blowing knife and the first negative pressure dust removal duct are movably disposed above the cutting base plate by the belt pressing lift cylinder to blow air onto the cutting base plate and collect dust, the first waste material duct is disposed below the cutting base plate, adsorbs the positioned electrode sheet by negative pressure, and synchronously collects cut waste together with the second waste material duct disposed on one side of the first support during laser cutting, the air knife pressure regulating valve and the belt pressing lift cylinder pressure regulating valve are both disposed on one side of the first support, the air knife pressure regulating valve is connected to the air blowing knife via an air tube, and the belt pressing lift cylinder pressure regulating valve is connected to the belt pressing lift cylinder via an air tube;
the laser focus height adjustment assembly comprises a second support and a liftable laser cutting group disposed on the second support, the liftable laser cutting group being located above the cutting base plate assembly; and
the optical path system comprises a picosecond laser, a beam expander, and a reflective mirror, wherein laser is emitted by the picosecond laser, the beam expander is configured to focus a light beam, the reflective mirror is configured to change a beam direction so that the light beam enters the liftable laser cutting group, and the tab cutting, V-corner cutting, and electrode sheet cutting on the cutting base plate are performed by the liftable laser cutting group.

3. The ultrafast picosecond laser die-cutting flaking machine according to claim 2, **characterized in that** the liftable laser cutting group comprises a plurality of servo lift modules arranged side by side, galvanometers movably disposed on the servo lift modules, and field lenses disposed at bottoms of the galvanometers, and a plurality of picosecond lasers are correspondingly provided.

4. The ultrafast picosecond laser die-cutting flaking machine according to claim 1, **characterized in that** the electrode sheet vacuum conveying belt mechanism comprises a first vacuum belt assembly, a second vacuum belt assembly, a third vacuum belt assembly, and a fourth vacuum belt assembly that are sequentially arranged along an electrode sheet conveying direction, a CCD dimension detection assembly is disposed on a top of the first vacuum belt assembly, a first vacuum belt brush dust removal assembly is disposed on a bottom of the first vacuum belt assembly, a second vacuum belt brush dust removal assembly is disposed on a top of the second vacuum belt assembly, an A-surface dust removal assembly and an A-surface CCD defect detection assembly are disposed on a bottom of the second vacuum belt assembly, a third vacuum belt brush dust removal assembly is disposed on a bottom of the third vacuum belt assembly, a B-surface dust removal assembly and a B-surface CCD defect detection assembly are disposed on a top of the third vacuum belt assembly, a fourth vacuum belt brush dust removal assembly is disposed on a top of the fourth vacuum belt assembly, a material ramming assembly is disposed at a material discharge position of the fourth vacuum belt assembly, a wide-width electrode sheet, after being cut at a preceding station, is sequentially conveyed through the first vacuum belt assembly, the second vacuum belt assembly, the third vacuum belt assembly, and the fourth vacuum belt assembly, during conveying, ion air knife blowing, negative pressure dust removal, and iron removal are performed, by the A-surface dust removal assembly and the B-surface dust removal assembly, on a front surface and a back surface of the electrode sheet, upon reaching the material receiving position, the electrode sheet is rammed by the material ramming assembly to the double-station electrode sheet regular receiving mechanism, and belts of the first vacuum belt assembly, the second vacuum belt assembly, the third vacuum belt assembly, and the fourth vacuum belt assembly are periodically cleaned by the first vacuum belt brush dust removal assembly, the second vacuum belt brush dust removal assembly, the third vacuum belt brush dust removal assembly, and the fourth vacuum belt brush dust removal assembly.

5. The ultrafast picosecond laser die-cutting flaking machine according to claim 4, **characterized in that** the first vacuum belt assembly comprises a first X-axis translation mechanism, a first vacuum cavity, a first negative pressure duct, a first vacuum belt, and a first belt drive motor, the first vacuum cavity is provided on the first X-axis translation mechanism, the first vacuum cavity is connected to a negative pressure source via the first negative pressure duct, the first vacuum belt is drivably disposed on the first vacuum cavity, and the first belt drive motor is disposed on one side of the first vacuum belt to drive the first vacuum belt;
the second vacuum belt assembly comprises a second vacuum cavity, a second negative pressure duct, a second vacuum belt, a second belt drive motor, a first belt tensioning mechanism, and a first belt lift cylinder, the second vacuum cavity is connected to the negative pressure source via the second negative pressure duct, the second vacuum belt is drivably disposed on the second vacuum cavity, the second belt drive motor is disposed on one side of the second vacuum belt to drive the second vacuum belt, the second vacuum belt is tensioned by the first belt tensioning mechanism, and the first belt lift cylinder is disposed on one side of the second vacuum belt and is capable of lifting the second vacuum belt;
the third vacuum belt assembly comprises a second X-axis translation mechanism, a third vacuum cavity, a third negative pressure duct, a third vacuum belt, and a third belt drive motor, the third vacuum cavity is disposed on the second X-axis translation mechanism, the third vacuum cavity is connected to the negative pressure source via the third negative pressure duct, the third vacuum belt is drivably disposed on the third vacuum cavity, and the third belt drive motor is disposed on one side of the third vacuum belt to drive the third vacuum belt; and
the fourth vacuum belt assembly comprises a fourth vacuum cavity, a fourth negative pressure duct, multiple vacuum belts, a fourth belt drive motor, a second belt tensioning mechanism, and a second belt lift cylinder, the fourth vacuum cavity is connected to the negative pressure source via the fourth negative pressure duct, the multiple vacuum belts are drivably disposed on the fourth vacuum cavity, the fourth belt drive motor is disposed on one side of the multiple vacuum belts to drive the multiple vacuum belts, the multiple vacuum belts are tensioned by the second belt tensioning mechanism, and the second belt lift cylinder is disposed on one side of the multiple vacuum belts and is capable of lifting the multiple vacuum belts.

6. The ultrafast picosecond laser die-cutting flaking machine according to claim 4, **characterized in that** the A-surface dust removal assembly comprises a first air knife, a first iron removal device, and a second negative pressure dust removal duct, and the first air knife and the first iron removal device are connected to the negative pressure source via the second negative pressure dust removal duct; and
the B-surface dust removal assembly comprises a second air knife, a second iron removal device, and a third negative pressure dust removal duct, and the second air knife and the second iron removal device are connected to the negative pressure source via the third negative pressure dust removal duct.

7. The ultrafast picosecond laser die-cutting flaking machine according to claim 4, **characterized in that** the material ramming assembly comprises a cam lift motor, a home position sensor, and a material striking plate, the cam lift motor is drivingly connected to the material striking plate, and the home position sensor is disposed on an output end of the cam lift motor.

8. The ultrafast picosecond laser die-cutting flaking machine according to claim 1, **characterized in that** the double-station electrode sheet regular receiving mechanism comprises a base, a Y-axis translation module, a third support, an X-axis translation module, a material box positioning assembly, a double-station OK material box, a lift assembly, and an electrode sheet regular assembly, the Y-axis translation module is disposed on a top of the base, the third support is movably disposed on the Y-axis translation module, the X-axis translation module is disposed on the third support, the material box positioning assembly is movably disposed on the X-axis translation module and is driven by the X-axis translation module to move from the material receiving position to a material ramming position, the material box positioning assembly is provided with a material receiving chamber, one end of the material receiving chamber is provided with a loading/unloading port, the double-station OK material box is pushable into the material receiving chamber or pullable out of the material receiving chamber through the loading/unloading port, after being pushed into the material receiving chamber, the double-station OK material box is fixed by the material box positioning assembly, the other end of the material receiving chamber is provided with a material box presence detection sensor for sensing presence of the double-station OK material box, the double-station OK material box is partitioned by a partition plate to form a first electrode sheet receiving position and a second electrode sheet receiving position, a first electrode sheet receiving plate is placed at a bottom of the first electrode sheet receiving position, and a second electrode sheet receiving plate is placed at a bottom of the second electrode sheet receiving position, two lift assemblies are provided, are disposed on a bottom of the material box positioning assembly, and respectively correspond to the first electrode sheet receiving plate and the second electrode sheet receiving plate, the electrode sheet regular assembly is disposed on a top of the third support, corresponding to the material ramming position, and regularizes, after the first electrode sheet receiving plate or the second electrode sheet receiving plate is lifted by the lift assembly, the electrode sheet thereon, and a full material load detection sensor is further disposed on the top of the third support for sensing presence of the first electrode sheet receiving plate or the second electrode sheet receiving plate.

9. The ultrafast picosecond laser die-cutting flaking machine according to claim 8, **characterized in that** the lift assembly comprises a lift guide rail, a left guide rod, a middle lift block, a right guide rod, a connecting bracket, and a stepper screw motor, the left guide rod, the middle lift block, and the right guide rod are movably disposed on the lift guide rail via the connecting bracket and are driven by the stepper screw motor to move up and down, positioning pins are disposed on tops of the left guide rod, the middle lift block, and the right guide rod, a magnet and a lift completion sensor are further disposed on the top of the middle lift block, and a position limiting sensor is disposed on a lower portion of the lift guide rail.

10. The ultrafast picosecond laser die-cutting flaking machine according to claim 8, **characterized in that** a dust removal assembly is further disposed at a bottom of the material box positioning assembly.
